**Europäisches Patentamt**

(19) **European Patent Office**

**Office européen des brevets**

(11) Publication number : **0 486 573 B1**

(12) # EUROPEAN PATENT SPECIFICATION

(45) Date of publication of patent specification :
**11.10.95 Bulletin 95/41**

(51) Int. Cl.[6] : **C22B 19/18,** C22B 19/16, C22B 19/30

(21) Application number : **90912345.7**

(22) Date of filing : **14.08.90**

(86) International application number :
**PCT/AU90/00344**

(87) International publication number :
**WO 91/02825 07.03.91 Gazette 91/06**

(54) ABSORPTION OF ZINC VAPOUR IN MOLTEN LEAD.

(30) Priority : **15.08.89 AU 5782/89**
**22.12.89 AU 7990/89**

(43) Date of publication of application :
**27.05.92 Bulletin 92/22**

(45) Publication of the grant of the patent :
**11.10.95 Bulletin 95/41**

(84) Designated Contracting States :
**BE ES FR IT**

(56) References cited :
**AU-B- 0 819 755**
**AU-B- 8 501 375**
**AU-B- 9 005 882**
**US-A- 4 042 379**

(73) Proprietor : **PASMINCO AUSTRALIA LIMITED**
**Level 15,**
**380 St Kilda Road,**
**Royal Domain Centre**
**Melbourne, VIC 3004 (AU)**

(72) Inventor : **HOSCHKE, Mark, Ian**
**90 Newcomen Street**
**Newcastle, NSW 2300 (AU)**

(74) Representative : **Orès, Bernard et al**
**Cabinet ORES**
**6, Avenue de Messine**
**F-75008 Paris (FR)**

## Description

This invention relates to an improved apparatus and process for absorbing zinc vapour into molten lead. Gases containing zinc vapour are commonly generated in zinc smelting processes (for example, the Imperial Smelting Process (ISP)) in slag fuming; and in the treatment of zinc-containing dusts and residues.

Existing industrial processes for recovering zinc from gases containing zinc vapour are essentially of three kinds, of which the abovementioned ISP process is one. The ISP process uses rotors or impellers to splash lead from a molten pool into the zinc-laden gas stream. In an alternative ISP process, zinc is used as the condensing medium rather than lead. The so-called SKF process uses molten lead or molten zinc in the form of a spray or curtain as cooling metal or medium towards which the gas stream containing zinc vapour is directed.

References relevant to the processes mentioned include D Temple, "Zinc-lead blast furnace - key developments", 1980 extractive metallurgy lecture to AIME, Metallurgical Transactions B vol. 2B, pp 343-352; GB 1,010,436 (Imperial Smelting); and GB 2,122,648 (SKF).

The ISP process suffers from accretions at the mouth of the condenser and in the condenser/absorption chamber causing frequent stoppages of the furnace operation. Theses accretions form on surfaces that are below the temperature where solid ZnO forms by the reaction $Zn + CO_2 \rightarrow ZnO + CO$. This reaction is called the reversion reaction and the temperature at which it occurs the 'reversion temperature'. The SKF process is free of this problem only because of the highly reduced gas entering the condenser.

Both processes suffer from shortcomings such as listed below:-
- Build-up of dross within the condenser/ absorber
- Poor efficiency
- The need for a large cooling and liquation circuit which is expensive to build and maintain
- Large carryover of lead droplets in the off-gas stream leading to lower zinc recoveries.

Further shortcomings of the existing process technologies and how they are overcome by the present invention will be described below.

In a principal aspect the invention provides a process for absorbing zinc vapour in molten lead which process comprises the steps of:

causing a stream of gas containing zinc vapour to enter a mixing chamber;

spraying molten lead by a first spraying means into the stream of gas containing zinc vapour to form a dispersion of molten lead droplets in the stream thereby contacting the molten lead droplets with the zinc vapour; and

passing the stream of gas containing zinc vapour having droplets of lead dispersed therein into a cyclone which serves both to contact and to separate the gas stream and the zinc-rich molten lead stream.

In a preferred embodiment, the apparatus of the invention comprises a refractory lined cross-over or off-take having an outlet at the bottom which opens into the mixing chamber that joins the cyclone.

Lead is introduced into the chamber by a lead spray directed into the gas stream. This spray produces a dispersion of lead droplets within the gas stream. Lead may be also introduced by additional sprays that completely wet the walls of both the vertical section before the cyclone and also within the cyclone itself.

The vertical chamber before the cyclone may also house one or more banks of static mixing elements. These elements not only serve to mix the lead droplets and gas together but also break up the lead droplets. This action causes a high degree of shear and a large contacting area as well as turbulence in both phases.

Mixing columns housing static mixing elements are known, and reference may be made by way of example to one such apparatus described in US Patent 4,744,928 to Sulzer Brothers Limited of Switzerland. The static mixing elements in that design are disposed within the chamber in a manner that deflects the flow of fluid impinging thereon and thereby promoted efficient mixing of gases and/or liquids passing through the chamber.

Provided the static mixing elements promote efficient mixing, their precise configuration is not critical to the present invention.

The molten lead now containing the absorbed zinc is passed into a system for recovery of the latter as well as for recirculation of the molten lead for renewed absorption. The off-gas is passed to a conventional gas cleaning system.

In the accompanying drawings:

Fig. 1 is a diagrammatic representation of an exemplary preferred embodiment of the process according to the invention;

Fig. 1a is a diagrammatic representation of an alternative exemplary preferred embodiment of the process according to the invention; and

Fig. 2 is a more detailed illustration of a preferred form of the components 2 (in part), 3 and 4 of Fig. 1.

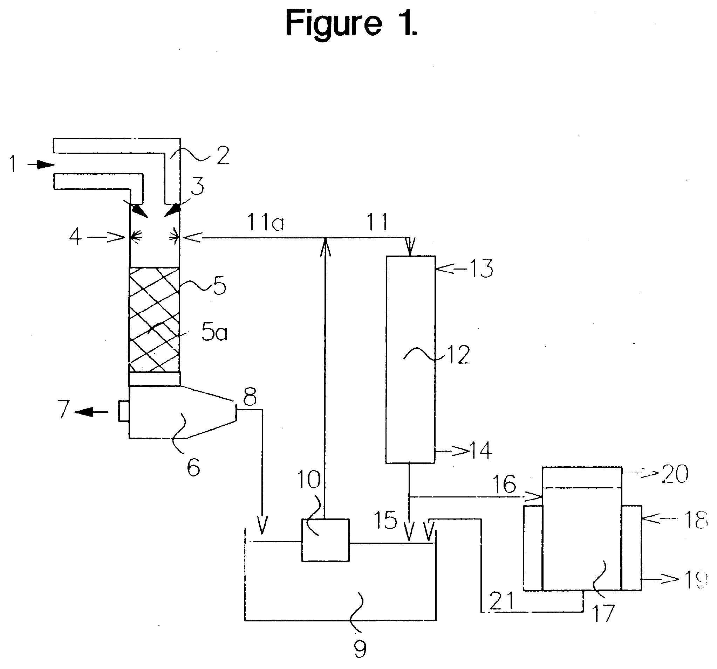

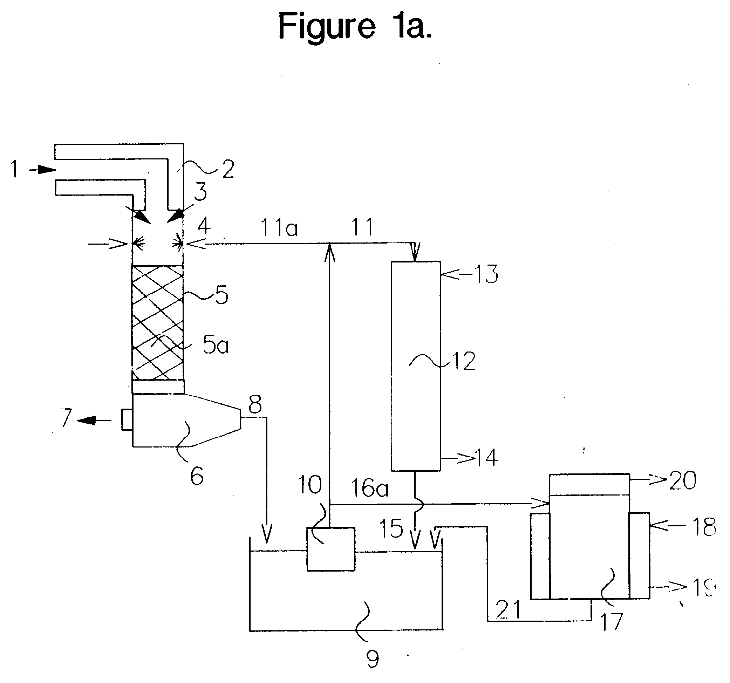

The construction and operation of the apparatus will be better understood by reference to Fig. 1 of the accompanying drawing. In this figure 1 represents zinc-laden gas from the smelting or slag fuming operation, and 2 represents a refractory lined off-take. A burner 3, called the 'transition burner', is provided to maintain the temperature of the lower region of the refractory above the Zn-ZnO reversion temperature. A lead spray (alternatively, a bank of lead sprays) 4 direct(s) molten lead to a vertical chamber 5 which may contain mixing elements 5a to enhance the contact between the zinc-laden gas and the molten lead.

A cyclone 6 serves both to contact and to separate the gas and the lead, the latter passing to the gas-cleaning system 7. The zinc-rich lead stream 8 is passed to the pump sump 9 provided with pump 10 conveying lead back through the absorption system. A zinc-lead stream is pumped from the sump 9 via line 11 to a lead cooler 12 and returned to the sump, and via line 11a to lead sprays 4. Numerals 13 and 14 represent a cooling water inlet and outlet respectively. A small portion of the zinc-lead is passed via line 16 to the liquation pot 17, which is provided with cooling water inlet 18 and outlet 19 respectively. Numeral 20 represents the zinc product and 21 a launder for returning liquated lead to the pump sum 9.

Turning to Fig. 1a, line 16 of Fig. 1 is replaced by line 16a from pump 10 direct to liquation pot 17 and bypassing lead cooler 12.

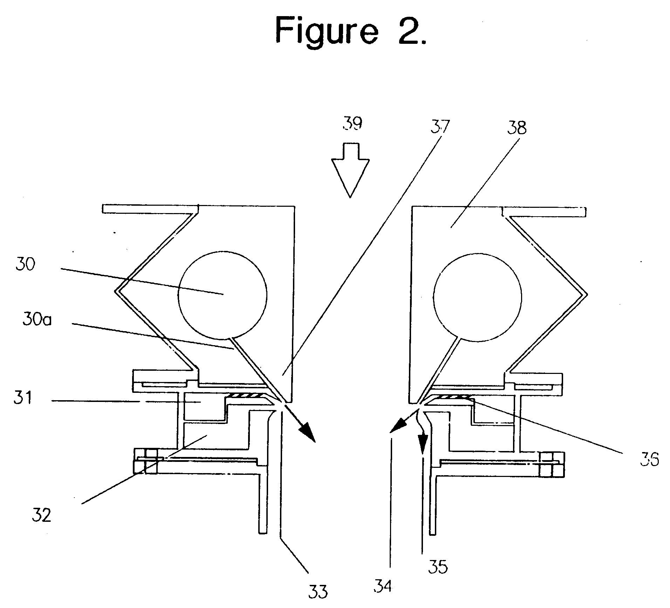

The items illustrated in Fig. 2 provide an example of a preferred transition burner and lead spray assembly.

Process gas, indicated by numeral 39, enters at the top and flows downward through the assembly.

A fuel such as propane is precombusted with oxygen. The hot gas is introduced tangentially into a toroid 30 penetrating a circumferential offtake body 38. The toroid 30 serves two purposes. Firstly, it evenly distributes the gas before it exits the burner and, secondly, it serves to heat the offtake body 38.

Numeral 30a indicates an exit port for hot gas into the central open space defined by the offtake body 38, the gas exiting as shown by arrow 33.

Upper and lower circumferential mains, 31 and 32 respectively, are shown for supply of streams of lead or zinc-lead in streams indicated by arrows 34 and 35 respectively. Numeral 36 indicates the presence of baffles to remove the swirl from stream 34 before it is deflected downwardly and towards the centre of the open space.

A circumferential truncated cone 37 extends downwardly into the stream of gas 39 and forms part of exit ports 30a.

The surface temperature of the inside of the toroid 30 is maintained at around 1500°C. Furthermore, the burner is run to give a good exit gas velocity (18 m/s) of highly reducing gas ($CO/CO_2 = 10$). As a fine control on the temperature, and to achieve good velocities without the burner getting too hot, nitrogen is also introduced into the burner.

The offtake body 38 is heated by the burner otherwise its surface would fall below the reversion temperature. The lower part of the offtake body 38 is directly above the region where lead is sprayed into the absorber. Consequently this lower part loses heat by radiation to the lead.

The gases exiting from the exit port 30a serve primarily to stop zinc from diffusing to the top lip of the lead spray causing an accretion. This top lip will always be held below the reversion temperature because of the lead in the spray.

The shape of cone 37 was found to be necessary to give protection against diffusion of process gas onto the cold lip of the lead spray. The high turbulence of the process gas greatly enhances the possibility of diffusion.

The top lead spray 34 is designed to introduce lead to the centre of the process gas stream. Lead may be introduced tangentially into a main 31 surrounding the spray. The swirl introduced to the lead by the tangential inlet is removed by baffles so that the lead is introduced radially but inclined downwardly into the process gas stream.

Lead or zinc-lead is introduced tangentially into a main 32 surrounding the spray. The lead maintains its high swirl and as it exits the spray it flattens itself against the walls. The swirl is sufficient to give a uniform coating down the mixer column.

As well as introducing lead or zinc-lead to the centre of the gas stream the top spray 34 is needed to contain the highly swirled bottom spray 35. Without this containment, lead from the bottom spray would flush upwards.

The spray system is designed so that splash upwards onto the refractory areas or upward movement from the bottom spray is substantially non-existent. If splash or upward movement occurs, the refractory is cooled below its reversion temperature and accretion forms.

The outlets of the top and bottom sprays are designed to be close together so that there are no unwetted areas of steelwork.

The principal benefits achievable by preferred embodiments of the present invention (designated 'Pasminco') are demonstrated vis-a-vis the characteristics of existing technologies in Table 1 below.

| Characteristic | Pasminco | SKF | ISP | Reasons |
|---|---|---|---|---|
| Contactor size | Of the order of 50% reduction in volume over ISP, 30% over SKF | Large | Large | Pasminco design of the absorber provides for much more shear and turbulent contact between gas and liquid. |
| Settler size | Of the order of 75% reduction over others | – | – | Pasminco settler uses a cyclone 6 to separate the lead droplets out of the gas, the other technologies rely on gravity settling. |
| Liquation/ cooling size | 50% reduction in plant floor area | Large | Large | Pasminco design separates the liquation/cooling functions into two different devices. The Pasminco cooler treats only highly turbulent, high temperature zinc-lead while the liquation pot treats only a small proportion of the zinc-lead in a quiescent bath. The ISP design relies on a quiescent open launder where all the lead is brought to the liquation temperature. |
| Growth of curtain accretions at the condenser/ absorber inlet | Eliminated | N.A. due to high CO content | Frequent cause of shutdowns | The transition burner on the Pasminco design keeps the entry to the condenser above the reversion temperature. The transition region between the hot and cold zones is entirely occupied by a flame or a lead spray making reversion impossible. In the SKF design reversion would occur here if the gas mixture was subject to reversion. In the ISP design the curtain forms in this area. |

EP 0 486 573 B1

| Characteristic | Pasminco | SKF | ISP | Reasons |
|---|---|---|---|---|
| Build up of dross within the condenser/absorber | Eliminated | Severe build-ups cause shutdowns | Severe build-ups cause shutdowns | Both SKF and ISP rely on dross removal by dross being sucked down with the lead into the pump sump. This is not very positive and dross builds up. Pasminco has no internal lead pool and dross must exit with the lead. |
| Zinc recovery efficiency | Of the order of 95% or better | 80-90% | 90% | The more efficient contacting of the Pasminco device produces a higher recovery for the same reasons that permit a smaller size device. The lower amount of dross make and lower lead droplet carryover both contribute to increased efficiency. |
| Lead droplet carryover | Very Low | High | High | The cyclone action of Pasminco's design eliminates the lead droplet carryover. The other technologies rely on gravity separation. |
| Furnace dust collection | Some | Nil | Nil | The cyclone action of Pasminco's design also collects some of the furnace dust. |
| Weight | Low | Medium | High – 500 t | Pasminco does not have an internal lead pool, neither does it incorporate a large launder to cool the lead. |
| Power Consumption | Low | Low | High – 700 hp | The ISP design has a high power consumption due to the power required to turn the rotors. |

It will be clearly understood that the invention in its general aspects is not limited to the specific details referred to above.

## Claims

1. A process for absorbing zinc vapour in molten lead which process comprises the steps of:

   causing a stream (1, 39) of gas containing zinc vapour to enter a mixing chamber (5);

   spraying molten lead by a first spraying means (34) into the stream of gas containing zinc vapour to form a dispersion of molten lead droplets in the stream thereby contacting the molten lead droplets with the zinc vapour; and

   passing the stream of gas containing zinc vapour having droplets of lead dispersed therein into a cyclone (6) which serves both to contact and to separate the gas stream and the zinc-rich molten lead stream.

2. A process as claimed in claim 1, further comprising the steps of spraying molten lead (35) onto the walls of the mixing chamber (5) to prevent reversion on the cold interior surfaces of the chamber.

3. A process as claimed in claim 1, further comprising heating refractory surfaces (38) near the entrance to the mixing chamber (5) wherein lead is introduced, to a temperature above the Zn/ZnO reversion temperature.

4. A process as claimed in claim 1, further comprising spraying molten lead through first spraying means and inserting hot reducing gas (33) between the gas containing zinc vapour and the top lip of the lead spraying means.

5. A process according to claim 2 comprising spraying molten lead onto the walls of the mixing chamber (5) by a second spraying means (35), and spraying molten lead into the stream of gas containing zinc vapour by a radially directed first spraying means (34) located adjacent to but upstream of the second spraying means (35), such that the lead from the second spraying means (35) is prevented from contacting refractory surfaces (38) upstream of the sprays.

6. A process as claimed in claim 1, further comprising providing one or more banks of static mixing elements (5a) in the mixing chamber (5) to promote mixing between the zinc vapour and the molten lead.

7. A process as claimed in anyone of claims 1 to 6, further comprising passing a zinc rich lead stream from the cyclone (6) to a reservoir (9) of zinc/lead, cooling part of the zinc/lead, and recycling part of the zinc/lead to the mixing chamber (5).

8. A process as claimed in claim 7, further comprising withdrawing a portion of the cooled stream to a zinc separation stage (17).

9. A process as claimed in claim 8, wherein the portion of the cooled stream withdrawn to the zinc separation stage (17) is a relatively small proportion of the mass flow of zinc/lead in the circuit.

10. A process as claimed in claim 7, further comprising withdrawing a portion of zinc/lead from the reservoir (9) and transferring the withdrawn portion without cooling to a zinc separation stage (17).

11. A process as claimed in claim 8, wherein the zinc separation stage comprises liquation means (17).

12. A process according to anyone of claims 1 to 11 wherein the stream (1, 39) of gas containing zinc vapour having droplets of lead disposed therein is passed downwardly in said mixing chamber (5).

13. A process according to claim 4 further comprising generating said hot reducing gas in a burner (3).

14. Apparatus for absorbing zinc vapour in molten lead which comprises a mixing chamber (5) and a cyclone (6) in communication with the mixing chamber, the mixing chamber (5) having inlet means for receiving a stream of gas containing zinc vapour, first spraying means for spraying molten lead (34) into the stream of gas containing zinc vapour, and second spraying means for spraying molten lead (35) onto internal walls of the mixing chamber (5), the cyclone (6) being positioned to receive from the mixing chamber, in use of the apparatus, a stream of gas containing zinc vapour and droplets of molten lead dispersed therein.

EP 0 486 573 B1

**15.** Apparatus as claimed in claim 14, wherein the inlet comprises a refractory-lined conduit (2) having an outlet that opens into the mixing chamber (5).

**16.** Apparatus as claimed in claim 15, further comprising a transition burner (3) for maintaining, in use of the apparatus, the temperature of the refractory-lined conduit (2) above the Zn/ZnO transition temperature and for inserting, in use of the apparatus, a layer of hot reducing gas (33) between the gas containing zinc vapour and an upstream portion of the first spraying means.

**17.** Apparatus as claimed in claim 14, further comprising means for conveying a zinc-rich lead stream (8) from said cyclone (6), means for recovering zinc from the zinc/lead stream, and means (11a) for returning a portion of the zinc/lead to the mixing chamber (5).

**18.** Apparatus according to claim 17, which includes means (12) to cool a portion of the zinc/lead.

**19.** Apparatus according to claim 17 further comprising means to convey said zinc-rich lead stream to a sump (9) for zinc/lead, means (10, 11a) to return a portion of the zinc/lead to the mixing chamber (5), means (11) to convey a portion of the zinc/lead to cooling means (12), means (16, 16a) to convey a portion of the zinc/lead to a liquation pot (17), and means to return zinc depleted lead (21) from said liquation pot (17) to said sump (9).

**20.** Apparatus according to claim 19 further comprising means (15) to return cooled lead/zinc to the sump (9).

**21.** Apparatus according to claim 14, wherein the first spraying means is located downstream from the refractory-lined conduit (2) and upstream from the second spraying means, the first spraying means being adapted to spray molten lead (34) radially into said mixing chamber (5).

**Patentansprüche**

**1.** Verfahren zum Absorbieren von Zinkdampf in geschmolzenem Blei, welches die folgenden Schritte aufweist:
Einlassen eines Zinkdampf enthaltenden Gasstromes (1, 39) in eine Mischkammer (5),
Einspritzen von geschmolzenem Blei mittels eines ersten Sprühmittels (34) in den Zinkdampf enthaltenden Gasstrom, um dadurch in dem Strom eine Dispersion von geschmolzenen Bleitropfen zu bilden, wobei die geschmolzenen Bleitröpfchen mit dem Zinkdampf in Kontakt gelangen, und
Überleiten des Zinkdampf enthaltenden Gasstromes mit in ihm verteilten Bleitröpfchen in einen Zyklon (6), der dazu dient, den Gasstrom und den zinkreichen Strom aus geschmolzenem Blei sowohl in Kontakt zu bringen als auch zu trennen.

**2.** Verfahren nach Anspruch 1, welches weiters den Schritt aufweist, daß geschmolzenes Blei (35) auf die Wände der Mischkammer (5) gesprüht wird, um eine Rückumwandlung an den kalten Innenflächen der Kammer zu vermeiden.

**3.** Verfahren nach Anspruch 1, bei welchem weiters in der Nähe des Einlasses der Mischkammer (5), in welchen Blei eingebracht wird, Refraktoroberflächen (38) auf eine Temperatur oberhalb der Zn/ZnO-Reversionstemperatur erhitzt werden.

**4.** Verfahren nach Anspruch 1, bei welchem weiters geschmolzenes Blei durch ein erstes Sprühmittel gesprüht und heißes, reduzierendes Gas (33) zwischen das Zinkdampf enthaltende Gas und das Auslaßende des Bleisprühmittels eingeführt wird.

**5.** Verfahren nach Anspruch 2, bei welchem mit Hilfe eines zweiten Sprühmittels (35) geschmolzenes Blei auf die Wände der Mischkammer (5) gesprüht wird und mit Hilfe eines radial gerichteten, ersten Sprühmittels (34), das in Nähe des zweiten Sprühmittels (35), jedoch stromauf von diesem gelegen ist, geschmolzenes Blei in den Zinkdampf enthaltenden Gasstrom gesprüht wird, sodaß das Blei von dem zweiten Sprühmittel (35) daran gehindert wird, mit den Refraktoroberflächen (38) stromauf der Sprühmittel in Kontakt zu kommen.

7

**6.** Verfahren nach Anspruch 1, bei welchem eine oder mehrere Reihen statischer Mischelemente (5a) in der Mischkammer (5) vorgesehen sind, um das Mischen zwischen dem Zinkdampf und dem geschmolzenen Blei zu fördern.

**7.** Verfahren nach einem der Ansprüche 1 bis 6, bei welchem weiters ein zinkreicher Bleistrom aus dem Zyklon (6) zu einem Reservoir (9) für Zink/Blei, einem Kühlabschnitt für das Zink/Blei und einem Wiedergewinnungsabschnitt für Zink/Blei zu der Mischkammer (5) geführt wird.

**8.** Verfahren nach Anspruch 7, bei welchem ein Teil des gekühlten Stromes zu einer Zinkabscheidestufe (17) abgezogen wird.

**9.** Verfahren nach Anspruch 8, bei welchem der zu der Zinkabscheidestufe (17) abgezogene Teil des gekühlten Stromes ein verhältnismäßig geringer Teil des Massenflusses aus Zink/Blei in dem Kreislauf ist.

**10.** Verfahren nach Anspruch 7, bei welchem weiters ein Teil des Zink/Bleis aus dem Reservoir (9) abgezogen und der abgezogene Teil ohne Kühlung zu einer Zinkabscheidestufe (17) übergeführt wird.

**11.** Verfahren nach Anspruch 8, bei welchem die Zinkabscheidestufe ein Seigermittel (17) aufweist.

**12.** Verfahren nach einem der Ansprüche 1 bis 11, bei welchem der Zinkdampf enthaltende Gasstrom (1, 39) mit in ihm verteilten Bleitröpfchen nach unten in die Mischkammer (5) übergeführt wird.

**13.** Verfahren nach Anspruch 4, bei welchem das heiße reduzierende Gas in einem Brenner (3) erzeugt wird.

**14.** Vorrichtung zum Absorbieren von Zinkdampf in geschmolzenem Blei, mit einer Mischkammer (5) und einem mit der Mischkammer in Verbindung stehenden Zyklon (6), wobei die Mischkammer (5) Einlaßmittel zur Aufnahme eines Zinkdampf enthaltenden Gasstromes aufweist, ein erstes Sprühmittel, um geschmolzenes Blei (34) in den Zinkdampf enthaltenden Gasstrom zu sprühen sowie ein zweites Sprühmittel, um geschmolzenes Blei (35) auf innere Wände der Mischkammer (5) zu sprühen, wobei der Zyklon (6) so angeordnet ist, daß er im Betrieb der Vorrichtung einen Zinkdampf enthaltenden Gasstrom mit darin verteilten Tröpfchen aus geschmolzenem Blei von der Mischkammer erhält.

**15.** Vorrichtung nach Anspruch 14, bei welcher der Einlaß eine mit Refraktormaterial ausgekleidete Leitung (2) mit einem sich in die Mischkammer (5) öffnenden Auslaß besitzt.

**16.** Vorrichtung nach Anspruch 15, welche weiters einen Umwandlungsbrenner (3) besitzt, um im Betrieb der Vorrichtung die Temperatur der mit Refraktormaterial ausgekleideten Leitung (2) oberhalb der Zn/ZnO-Umwandlungstemperatur zu halten und um im Betrieb der Vorrichtung eine Schicht aus heißem reduzierendem Gas (33) zwischen das Zinkdampf enthaltende Gas und einen oberen Abschnitt des ersten Sprühmittels einzubringen.

**17.** Vorrichtung nach Anspruch 14, welches weiters ein Mittel zum Fördern eines zinkreichen Bleistromes (8) von dem Zyklon (6), ein Mittel zur Wiedergewinnung von Zink aus dem Zink/Blei-Strom sowie ein Mittel (11a) zum Zurückführen eines Teils des Zink/Bleis zu der Mischkammer (5) aufweist.

**18.** Vorrichtung nach Anspruch 17, welche ein Mittel (12) zum Kühlen eines Teiles des Zink/Bleis besitzt.

**19.** Vorrichtung nach Anspruch 17, welche weiters ein Mittel zum Fördern des zinkreichen Bleistroms zu einem Zink/Blei-Sumpf (9), ein Mittel (10, 11a) zum Rückführen eines Teils des Zink/Bleis zu der Mischkammer (5), ein Mittel (11) zum Fördern eines Teils des Zink/Bleis zu einem Kühlmittel (12), ein Mittel (16, 16a) zum Fördern eines Teils des Zink/Bleis zu einem Seigertopf (17) und ein Mittel zum Rückführen des von Zink abgereicherten Bleis (21) von dem Seigertopf (17) zu dem Sumpf (19) besitzt.

**20.** Vorrichtung nach Anspruch 19, welche weiters ein Mittel (15) zum Rückführen des gekühlten Blei/Zinks zu dem Sumpf (9) besitzt.

**21.** Vorrichtung nach Anspruch 14, bei welcher das erste Sprühmittel stromab der mit Refraktormaterial ausgekleideten Leitung (2) und stromauf des zweiten Sprühmittels gelegen ist, wobei das erste Sprühmittel eingerichtet ist, geschmolzenes Blei (34) radial in die Mischkammer (5) zu sprühen.

## Revendications

1. Procédé d'absorption de vapeur de zinc dans du plomb fondu, ledit procédé comprenant les étapes de :

faire entrer un courant (1,39) de gaz contenant de la vapeur de zinc dans une chambre de mélange (5) ;

pulvérisation de plomb fondu, par un premier dispositif de pulvérisation (34), dans le courant de gaz contenant la vapeur de zinc, pour former une dispersion de gouttelettes de plomb fondu dans ledit courant de gaz, de manière à mettre en contact les gouttelettes de plomb fondu avec la vapeur de zinc ; et

passage du courant de gaz contenant la vapeur de zinc, dans lequel sont dispersées les gouttelettes de plomb, dans un cyclone (6) qui sert à la fois à mettre en contact et à séparer le courant de gaz et le courant de plomb fondu riche en zinc.

2. Procédé suivant la revendication 1, comprenant en outre les étapes de pulvérisation de plomb fondu (35) sur les parois de la chambre de mélange (5) afin d'éviter une inversion sur les surfaces intérieures froides de la chambre.

3. Procédé suivant la revendication 1, comprenant en outre le chauffage de surfaces réfractaires (38), près de l'entrée dans la chambre de mélange (5) dans laquelle le plomb est introduit, à une température supérieure à la température d'inversion Zn/ZnO.

4. Procédé suivant la revendication 1, comprenant en outre la pulvérisation de plomb fondu par le premier dispositif de pulvérisation, et l'insertion d'un gaz réducteur chaud (33) entre le gaz contenant la vapeur de zinc et la lèvre supérieure du dispositif de pulvérisation de plomb.

5. Procédé suivant la revendication 2, comprenant la pulvérisation de plomb fondu sur les parois de la chambre de mélange (5) par un deuxième dispositif de pulvérisation (35), et la pulvérisation de plomb fondu dans le courant de gaz contenant la vapeur de zinc par un premier dispositif de pulvérisation dirigé radialement (34) placé près mais en amont du deuxième dispositif de pulvérisation (35), de sorte que le plomb venant du deuxième dispositif de pulvérisation (35) est empêché de venir en contact avec les surfaces réfractaires (38) en amont des jets de pulvérisation.

6. Procédé suivant la revendication 1, comprenant en outre l'utilisation d'une ou plusieurs séries d'éléments de mélange statiques (5a) dans la chambre de mélange (5) pour favoriser le mélange entre la vapeur de zinc et le plomb fondu.

7. Procédé suivant une quelconque des revendications 1 à 6, comprenant en outre le passage d'un courant de plomb riche en zinc du cyclone (6) à un réservoir (9) de zinc/plomb, le refroidissement d'une partie du zinc/plomb et le recyclage d'une partie du zinc/plomb vers la chambre de mélange (5).

8. Procédé suivant la revendication 7, comprenant en outre l'extraction d'une portion du courant refroidi, vers un étage de séparation de zinc (17).

9. Procédé suivant la revendication 8, dans lequel la portion du courant refroidi extraite vers l'étage de séparation de zinc (17) est une proportion relativement petite du débit massique de zinc/plomb dans le circuit.

10. Procédé suivant la revendication 7, comprenant en outre l'extraction d'une portion de zinc/plomb du réservoir (9) et le transfert de la portion extraite, sans refroidissement, vers un étage de séparation de zinc (17).

11. Procédé suivant la revendication 8, dans lequel l'étage de séparation de zinc comprend des moyens de liquation (17).

12. Procédé suivant une quelconque des revendications 1 à 11, dans lequel le courant (1,39) de gaz contenant la vapeur de zinc,dans lequel sont dispersées les gouttelettes de plomb,est dirigé vers le bas dans ladite chambre de mélange (5).

13. Procédé suivant la revendication 4, comprenant en outre la génération dudit gaz réducteur chaud dans un brûleur (3).

14. Appareil pour l'absorption de vapeur de zinc dans du plomb fondu, qui comprend une chambre de mélange (5) et un cyclone (6) en communication avec la chambre de mélange, la chambre de mélange (5) comportant des moyens d'entrée pour recevoir un courant de gaz contenant la vapeur de zinc, un premier dispositif de pulvérisation pour pulvériser le plomb fondu (34) dans le courant de gaz contenant la vapeur de zinc, et un deuxième dispositif de pulvérisation pour pulvériser du plomb fondu (35) sur les parois intérieures de la chambre de mélange (5), le cyclone (6) étant placé de manière à recevoir en provenance de la chambre de mélange, pendant l'utilisation de l'appareil, un courant de gaz contenant la vapeur de zinc dans lequel sont dispersées les gouttelettes de plomb fondu.

15. Appareil suivant la revendication 14, dans lequel l'entrée comprend un conduit revêtu de réfractaire (2) ayant une sortie qui débouche dans la chambre de mélange (5).

16. Appareil suivant la revendication 15, comprenant en outre un brûleur de transition (3) pour maintenir, pendant l'utilisation de l'appareil, la température du conduit revêtu de réfractaire (2) au-dessus de la température de transition Zn/ZnO, et pour insérer, pendant l'utilisation de l'appareil, une couche de gaz réducteur chaud (33) entre le gaz contenant la vapeur de zinc et une partie amont du premier dispositif de pulvérisation.

17. Appareil suivant la revendication 14, comprenant en outre des moyens de transfert d'un courant de plomb riche en zinc (8) à partir dudit cyclone (6), des moyens de récupération du zinc à partir du courant de zinc/plomb, et des moyens (11a) de renvoi d'une portion du zinc/plomb à la chambre de mélange (5).

18. Appareil suivant la revendication 17, qui comprend des moyens (12) de refroidissement d'une portion du zinc/plomb.

19. Appareil suivant la revendication 17, comprenant en outre des moyens de transfert dudit courant de plomb riche en zinc vers un bac (9) pour le zinc/plomb, des moyens (10,11a) de renvoi d'une portion du zinc/plomb à la chambre de mélange (5), des moyens (11) de transf-ert d'une portion du zinc/plomb vers des moyens de refroidissement (12), des moyens (16,16a) de transfert d'une portion du zinc/plomb vers un pot de liquation (17) , et des moyens de retour du plomb appauvri en zinc (21) dudit pot de liquation (17) audit bac (9).

20. Appareil suivant la revendication 19, comprenant en outre des moyens (15) de retour du plomb/ zinc refroidi au bac (9).

21. Appareil suivant la revendication 14, dans lequel le premier dispositif de pulvérisation est situé en aval du conduit revêtu de réfractaire (2) et en amont du deuxième dispositif de pulvérisation,le premier dispositif de pulvérisation étant prévu pour pulvériser du plomb fondu (34) radialement dans ladite chambre de mélange (5).

# Figure 1.

EP 0 486 573 B1

# Figure 1a.

EP 0 486 573 B1

# Figure 2.